# EUROPEAN PATENT SPECIFICATION

(11) **EP 2 319 299 B1**
(45) Date of publication and mention of the grant of the patent: **17.09.2014**
(21) Application number: 10190208.8
(22) Date of filing: 05.11.2010
(51) Int. Cl.: A01K 5/00, B01F 7/24, B01F 13/10, B01F 13/00

(54) **Mixing device**
Mischvorrichtung
Dispositif de mélange

(30) Priority: 06.11.2009 NL 2003769
(43) Date of publication of application: 11.05.2011
(73) Proprietor: Trioliet Holding B.V., 7575 BE Oldenzaal (NL)
(72) Inventor: Liet, Cornelis Hendricus, 7581 TJ Losser (NL)
(74) Representative: De Vries & Metman

(56) References cited:
- WO-A1-2007/083998
- WO-A2-2007/037693
- CA-A1- 2 307 962
- DE-U1-202004 011 784
- NL-C1- 1 014 571

## Description

The present invention relates to a mixing device according to claim 1, for instance for mixing fodder or a biomass, the mixing device comprising a container having a bottom and an upright wall, wherein at least one rotatable mixing auger is positioned in the container, the mixing auger comprising a column and at least one helical mixing blade attached to the column, The mixing blade comprises a front edge which can be moved over the bottom to lift product to be mixed from the bottom.

WO 2007/083998 discloses a mixing device for fodder according to the preamble of claim 1, with a rotatable mixing auger in a container having one or more rotatable discs attached onto the mixing blade. The disclosed embodiments comprise a lower disc forming the front edge of the mixing blade. Optionally the auger is provided with two mixing blades. It is also possible to provide the mixing apparatus with two or more mixing augers in the container.

It is an object of the invention to provide a mixing device enabling improved mixing with a more simple construction requiring less power and enabling removal of fodder as much as possible.

The object of the invention is achieved with a mixing device according to claim 1, as described in the opening paragraph wherein the mixing auger is provided with a carrier carrying a rotatable disc, wherein the front edge of the mixing blade is fixed relative to the column. At least one side of the disc is at the same level as the front edge of the mixing blade, while the angular distance between the front edge of the mixing blade and the rotatable disc is larger than 0 radians, e.g., larger than 0,8 radians or larger than 1,6 radians. This way, the mixing blade comprises a front edge which is not rotatable relative to the mixing blade, while a separate carrier attached to the column carries a rotatable disc. At least one side of the disc is positioned at about the same height as the front edge of the mixing blade, which means that at least one side of the disc is moveable over the bottom to take up product to be mixed. It is also possible to use more than one carrier carrying rotatable discs at an angular distance from the front edge, if so desired. The fixed front edge does not carry a rotatable disc and can be provided with a blade and/or a scraper for effective removal of fodder from the bottom and the wall of the container, if so desired. It has been found that the combination of a fixed front edge and a rotatable disc on a separate carrier arm results in very good mixing and low power consumption allowing very effective emptying of the container. It has been found that the fodder can be mixed and dosed in a better way than would be possible with a mixing device with a disc forming the front edge of the mixing blade. Moreover, the disc does not need to be in line with the mixing blade, resulting in more constructional freedom.

The carrier with the rotatable disc and the fixed front edge of the mixing blade can for instance be attached to the column at diametrically opposite positions.

For effective cleaning of the container bottom the rotatable disc can for instance be horizontal. Alternatively, the disc can be tilted forwardly, relative to the rotational direction of the mixing auger, e.g., with an angle of 2 - 12 degrees or more, in such way that the front edge of the disc slides closely over container bottom to improve uptake of the product to be mixed.

The invention also pertains to a mixing device, e.g., for mixing fodder or biomass, the device comprising a container with a bottom and an upright wall, wherein at least one rotatable mixing auger is positioned in the container, the mixing auger having a column and at least one helical mixing blade attached to the column, wherein the mixing auger comprises a carrier carrying a rotatable disc partly covered by a cover plate. Such a cover plate can also be used with a mixing device with a rotatable disc forming the front edge of the mixing blade.

The part of the disc covered by the cover plate can for instance be located between the axis of rotation of the rotatable disc and the column of the mixing auger. As a result, the disc is submitted to friction by fodder only at the part which is not covered, so the forces exerted onto the disc at one side of the axis of rotation are countered to a lesser extent by forces exerted at the other side of the axis of rotation. As a result, the disc is driven to rotate in a way which is 13 times more effective and friction forces are reduced.

In an alternative embodiment the disc part covered by the cover plate is positioned between the axis of rotation of the rotatable disc and the circumferential edge of the mixing auger. This way, the disc will rotate the other way around.

To prevent fodder from jamming between the cover plate and the rotatable disc, the distance between the disc and the cover plate near the front edge can be kept smaller than at the opposite side of the cover plate.

The invention also pertains to a mixing device, e.g., for mixing fodder or a biomass, the device comprising a container with a bottom and an upright wall, wherein at least one rotatable mixing auger is positioned in the container, the mixing auger having a column, at least one helical mixing blade attached to the column, and a carrier carrying a rotatable disc moveable over the bottom of the container, wherein a horizontal edge projects from the front and/or lateral section of the circumference of the disc. The horizontal edge reduces wear and protects the disc against damage by foreign objects on the container bottom. This can also be used with a mixing device with a rotatable disc forming the front edge of the mixing blade.

The invention also pertains to a mixing device, e.g., for mixing fodder or a biomass, the device comprising a container with a bottom and an upright wall, wherein at least one rotatable mixing auger is positioned in the container, the mixing auger having a column and at least one helical mixing blade attached to the column, wherein the disc is provided with an uneven upper surface, e.g., having ribs, milled inclined surfaces or a different relief. This enhances friction between the product to be mixed and the rotatable disc, so the disc is driven more effectively by friction forces. This measure can also be used with a mixing device with a rotatable disc forming the front edge of the mixing blade.

If so desired, the rotatable disc can be coupled to a mechanical drive, for instance by means of a gear transmission coupled to a static part, such as the column. This measure can also be used with a mixing device with a rotatable disc forming the front edge of the mixing blade.

In a further possible embodiment the upper surface of the disc can be provided with a drum for further displacement of the product to be mixed. In that case, the disc can be journaled to the drum, which is attached by a flange connection to a carrier which in turn is attached to the mixing auger. The drum contributes to the displacement of the product to be mixed lifted by the disc. This measure can also be used with a mixing device with a rotatable disc forming the front edge of the mixing blade.

In a further possible embodiment of the mixing device according to the invention a flat plate can be attached to the front edge of the mixing blade, which plate inclines upwardly relative to the bottom, and which plate is provided with a beveled edge forming the front edge viewed in the rotational direction of the mixing auger.

The mixing device according to the invention is particularly suitable for mixing fodder for cattle. The device can also be used for mixing other solid products to be mixed, such as biomasses like waste from food industry, manure, compost, garden waste, sawing dust, bank cuttings, or food products which are not consumable anymore or sprinkle material such as straw with lime, sand with composted manure or mixtures of new and old sprinkle materials.

The present invention will be elucidated with reference to the figures wherein:
- Figure 1A:: shows in part a cross section of an embodiment of a mixing device according to the invention;
- Figure 1B:: shows a mixing auger of the mixing device from Figure 1A;
- Figure 2A:: shows a mixing auger of a further possible embodiment according to the invention;
- Figure 2B:: shows the mixing auger of Figure 2A in more detail;
- Figure 2C:: shows a third possible embodiment of a mixing device according to the invention;
- Figure 3:: shows a mixing auger of a fourth possible embodiment of a mixing device according to the invention;
- Figure 4:: shows a mixing auger of a fifth possible embodiment of a mixing device according to the invention;
- Figure 5:: shows a mixing auger of a sixth possible embodiment of a mixing device according to the invention;
- Figure 6A:: shows a seventh possible embodiment of a mixing device according to the invention;
- Figure 6B:: shows the detail encircled in Figure 6A;
- Figure 7:: shows a mixing auger of a fourth possible embodiment of a mixing device according to the invention.

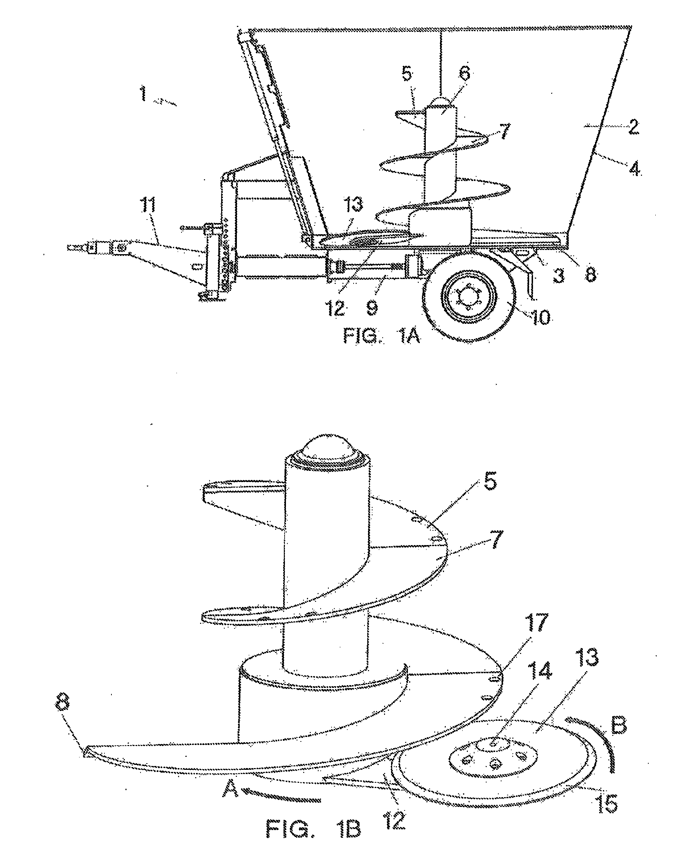

Figure 1A shows a mixing device 1 for mixing fodder for cattle. The mixing device 1 comprises a container 2, shown by the drawing in cross section. The container 2 comprises a bottom 3 and an upright closed wall 4. A mixing auger 5 is positioned within the container 2 and is shown in more detail in Figure 1A. The mixing auger 5 comprises an upright column 6 and a helical mixing blade 7 attached to the column 6. The circumferential edge of the mixing blade 7 usually has a diameter which is smaller near the top of the column 6 than near the bottom 3 of the container 2. The mixing blade 7 is provided with a straight front edge 8 extending from the column 6 in a substantially radial direction.

The column 6 is journalled rotatably to the bottom 3. The column 6 is coupled to a drive (not shown) underneath the bottom 3 of the container 2. When the column 6 is driven the mixing auger 5 in the container 2 rotates and the front edge 8 of the mixing blade 7 sweeps over the bottom 3.

In the embodiment of Figures 1A and 1B, the container 2 is placed on a mobile frame 9 with wheels 10 and a coupling arm 11 for coupling with, e.g., a tractor.

A radial carrier arm 12 is attached to the column 6 in the container 2, the carrier am 12 carrying a disc 13 which is rotatable about an axis 14. The radial carrier arm 12 is positioned more or less diametrically opposite to the front edge 8 of the mixing blade 7. The disc 13 is horizontal but can also be inclined in such a way that the front edge - viewed in the direction of the augers rotation - is moved at short distance above the bottom. The disc 13 can be provided with a beveled edge 15.

When the mixing auger in the container 2 is rotated in the direction of arrow A in Figure 1B, the disc 13 rotates relative to the carrier arm 12 in the direction of arrow B. As a result, the net angular velocity of fodder lifted by the rotating disc 13 is about zero. The fodders resistance against rotation of the mixing auger of the mixing auger is thereby reduced, while the mixing is strongly improved.

Near the outer circumference of the mixing blade 7 the mixing auger 5 is provided with holes 17 for the attachment of knives (not shown) for further chopping the fodder to be mixed.

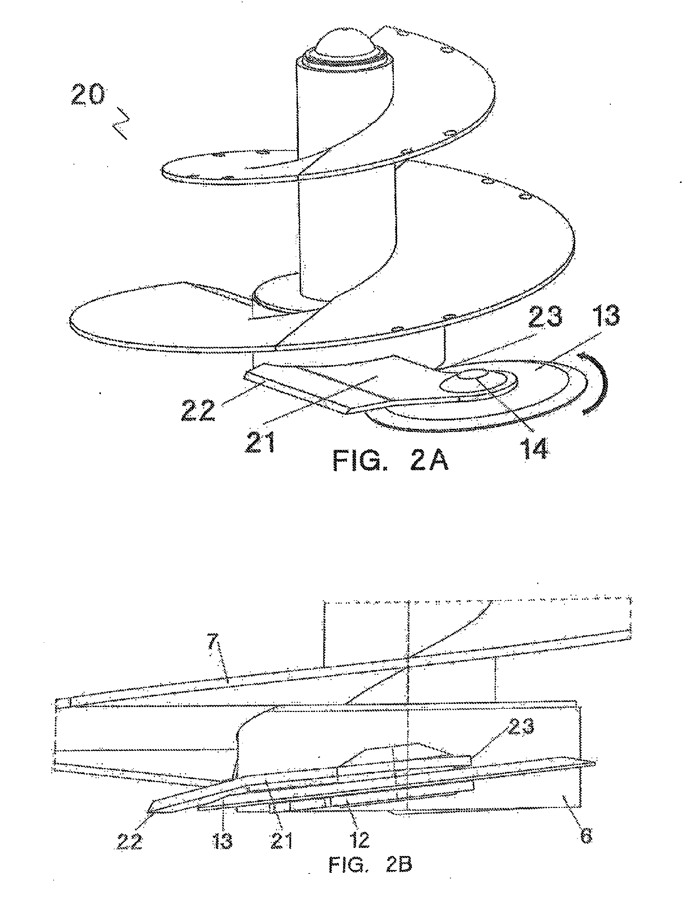

Figures 2A and 2B show a further possible auger 20 of a mixing device according to the invention. The mixing auger 20 is substantially similar to mixing auger 5 of the embodiment shown in Figures 1A and 1B, with the difference that the rotatable disc 13 is partly covered by a cover plate 21 which is fixed to the column 6. The covered section of the disc 13 is located between the axis of rotation 14 and the column 6. As a result the disc 13 is submitted to friction by fodder on the part which is not covered, so forces exerted on the disc at one side of the axis of rotation 14 are countered to a lesser extent by forces exerted on the other side of the axis of rotation 14. Consequently the disc 13 is driven more effectively to rotate and friction forces are reduced. For better coverage of the rotatable disc 13 the cover plate 21 comprises an edge 22 which is a front edge viewed in the rotational direction of the mixing auger and which inclines upwardly relative to the bottom. The disc 13 and the cover plate 21 are tilted forwardly under a small angle. Near the inclined front edge 22 the distance between the disc 13 and the cover plate 21 is somewhat larger than at the back side 23. This way, fodder which got between the disc 13 and the cover plate 21 at the back side, cannot jam between the disc 13 and the cover plate 21 and can be removed.

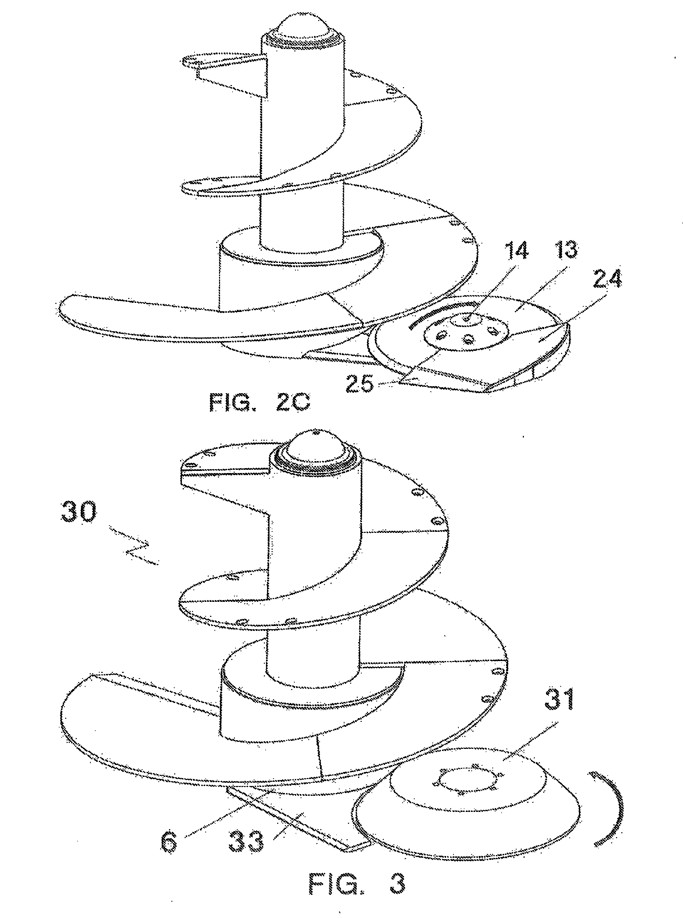

Figure 2C shows a variant with a cover plate 24 partly covering a part of disc 13 between the axis of rotation 14 and the wall 4 of the container 2. This way the disc 13 will only be submitted to friction by fodder at the inner side which is not covered, and will rotate in the other direction, as indicated by the arrow. Also the cover plate 24 is provided with an upwardly inclined front edge 25.

Figure 3 shows a fourth possible auger 30 of a mixing device according to the invention. The auger 30 is substantially similar to the mixing auger 5 of the embodiments shown in Figures 1A and 1B, with the difference that it comprises a horizontal rotatable disc 31 with a conical body having a height which is larger than the thickness of the mixing blade 7. When the auger rotates the disc 13 cleans the bottom 3 of the container 2. It has been found that such a conical disc 13 can remove the last remainders of fodder very effectively. Fodder is lifted higher so the mixing is improved. Such a disc 31 is particularly suitable for improving mixing by a mixing device with a plurality of mixing augers because of the improved exchange of fodder between the augers. At its front side the disc 13 is provided with a beveled intermediate blade 33 which spans from about the foremost point of the disc 31 to the column 6. The disc 31 is carried by a lower flat plate (not shown).

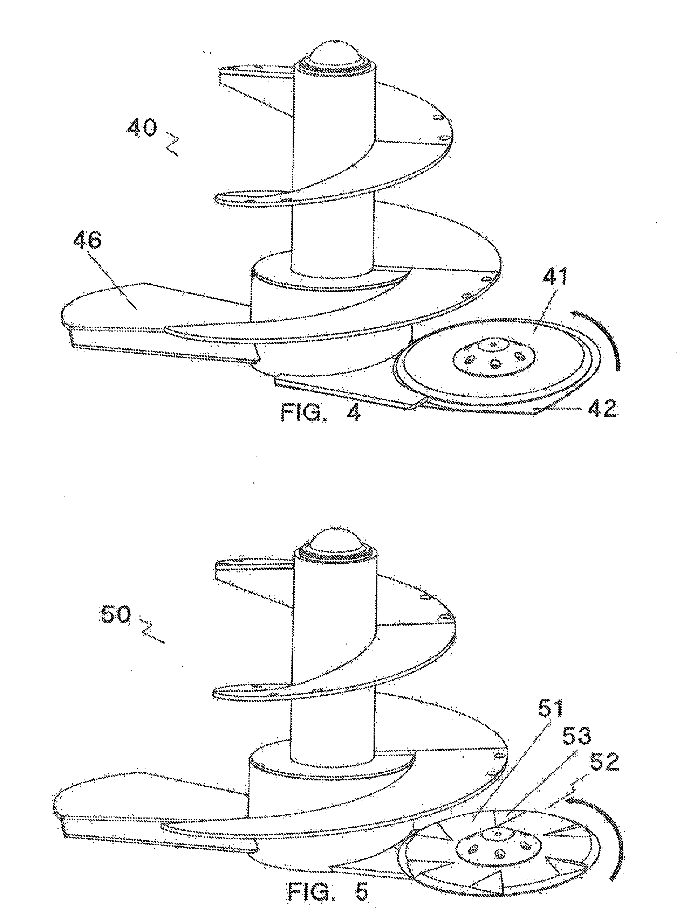

Figure 4 shows a further possible auger 40 of a mixing device according to the invention. Also the auger 40 is substantially similar to the mixing auger 5 of the embodiment shown in Figures 1A and 1B, with the difference that a horizontal edge 42 extends along at least a part of the circumference of the disc 41. The edge 42 protects the disc 41 against wear and against damage by foreign objects on the bottom 3 of the container 2.

The front edge of the mixing auger 5 of the embodiment shown in Figure 4 further comprises a flat triangular plate 46 near the bottom 3 of the container 2, which wipes over the container bottom when the mixing auger 5 rotates.

Figure 5 shows a sixth possible auger 50 of a mixing device according to the invention. Here as well, the mixing auger 50 is substantially similar to the mixing auger 5 of the embodiment of Figures 1A and 1B. However, the disc 51 is provided with a relief on its top surface 52. This enhances the friction force between the fodder and the disc 51. In the shown embodiment the relief includes recesses 53 milled or pressed under an angle into the upper surface 52. However, the relief can also comprise ribs or other surface textures.

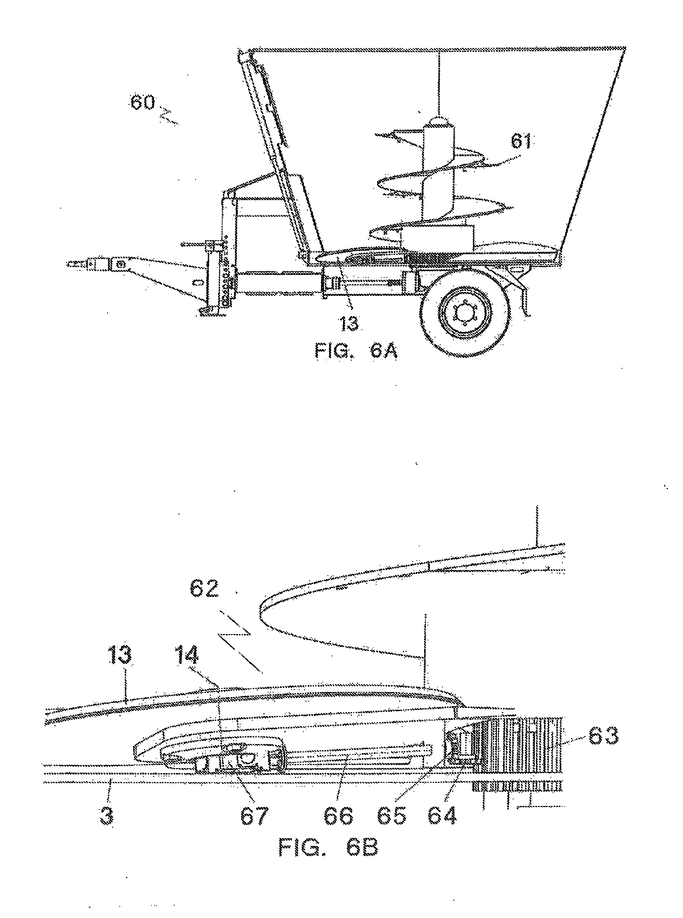

Figure 6A shows a seventh possible mixing device 60 according to the invention. The mixing device 60 is substantially similar to the embodiment in Figures 1A and 1B, with the difference that the rotating disc is driven mechanically by a gear transmission 62 shown in detail in Figure 6B. Near the bottom 3 of the container 2 the column 6 comprises a stationary gear ring 63. A horizontal gear wheel 64 rotates with the mixing auger 5 along the gear ring 63. At the opposite side the gear wheel 64 is coupled to a second gear wheel 65 which is in turn coupled to a shaft 66, which is in turn coupled by a transmission 67 to the axis of rotation 14 of the rotatable disc 13. When the mixing auger 5 rotates it drives the rotatable disc 13 via the gear ring 63, gear wheels 64, 65 and shaft 66. The driving mechanism can selectively be configured to drive the disc 13 to rotate either left or right. At several locations on its circumferential edge the mixing auger 5 is provided with knives 61.

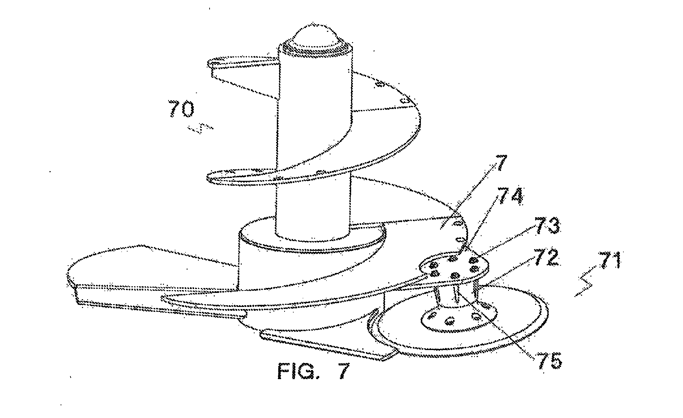

Figure 7 shows an eighth possible auger 70 of a mixing device according to the invention. Also in this case the mixing auger 70 is substantially similar to the mixing auger 5 of the embodiment shown in Figures 1A and 1B. The mixing auger 70 comprises a rotatable disc 71 which is rotatably journalled onto a drum, which is attached to a flange 74, e.g., by means of bolt connections 73. The flange 74 is connected to the lower side of the mixing blade 7, which is provided with a recess to improve accessibility of the fastening means 73. The drum 72 is provided with a relief 75, which increases friction force between the fodder and the drum 72. During rotation of the mixing auger the drum 72 can continue transportation of fodder lifted by the disc 71. This results in further improved mixing.

## Claims

1. Mixing device comprising a container with a bottom and an upright wall, wherein at least one rotatable mixing auger (5, 20, 40) is positioned in the container comprising a column and at least one helical mixing blade (7) attached to the column, the mixing blade comprising a front edge (8) which can be moved over the bottom, wherein the mixing auger is provided with a carrier carrying a rotatable disc (13, 31, 41, 51, 71), wherein the front edge of the mixing blade is fixed relative to the column, and wherein at least one side of the rotatable disc is at the same height as the front edge of the mixing blade and wherein the angular distance between the front edge of the mixing blade and the rotatable disc is larger than 0 radians and wherein the carrier is a separate carrier arm (12) **characterized in that** said fixed front edge does not carry a rotatable disc.

2. Mixing device according to claim 1 wherein the rotatable disc and the fixed front edge (8) of the mixing blade (7) are attached to the column at diametrically opposing positions.

3. Mixing device according to claim 1 or 2 wherein the disc is horizontal.

4. Mixing device according to claim 1 or 2 wherein the disc is forwardly inclined relative to the rotational direction of the mixing auger (5, 20).

5. Mixing device according to any one of the preceding claims wherein the disc (13) is at least partly covered by a cover plate (21).

6. Mixing device according to claim 5 wherein the disc section which is covered by the cover plate (21) is positioned between the axis of rotation of the rotatable disc and the column of the mixing auger (20).

7. Mixing device according to claim 5 or 6 wherein the disc section which is covered by the cover plate (21) is positioned between the axis of rotation of the rotatable disc and the circumferential edge of the mixing auger (5).

8. Mixing device according to claim 5, 6 or 7 wherein the distance between the disc and the cover plate is smaller near the front edge (8) of the mixing blade (7) than near the opposite side of the opposite side of the cover plate.

9. Mixing device according to any one of the preceding claims wherein a horizontal edge (42) protrudes from at least the front and/or lateral part of the circumference of the disc (41).

10. Mixing device according to any one of the preceding claims wherein the disc (51) is provided with an uneven upper surface (52).

11. Mixing device according to claim 10 wherein the upper surface (52) is provided with ribs and/or inclined surfaces.

12. Mixing device according to claim the rotatable disc is coupled to a mechanical drive (62).

13. Mixing device according to any one of the preceding claims wherein the disc comprises a drum (71) at its upper surface for further displacement of the product to be mixed.

14. Mixing device according to claim 13 wherein the disc is journaled to the drum (71), which is connected by a flange connection to a carrier attached to the mixing auger (70).

15. Mixing device according to any one of the preceding claims wherein a flat plate is attached to the front edge of the mixing blade (7), which plate inclines upwardly relative to the bottom and which plate is provided with a beveled edge forming the front edge viewed in the rotational direction of the mixing auger (5).

## Patentansprüche

1. Mischvorrichtung, die einen Behälter mit einem Boden und einer aufrecht stehenden Wand aufweist, wobei mindestens eine drehbare Mischschnecke (5, 20, 40) im Behälter positioniert ist, die eine Säule und mindestens einen an der Säule angebrachten Spiralmischflügel (7) aufweist, wobei der Mischflügel eine Vorderkante (8) aufweist, die über den Boden bewegt werden kann, wobei die Mischschnecke mit einem Träger versehen ist, der eine drehbare Scheibe (13, 31, 41, 51, 71) trägt, wobei die Vorderkante des Mischflügels relativ zur Säule feststehend ist und wobei mindestens eine Seite der drehbaren Scheibe auf gleicher Höhe wie die Vorderkante des Mischflügels liegt und wobei der Winkelabstand zwischen der Vorderkante des Mischflügels und der drehbaren Scheibe größer als 0 Radian ist und wobei der Träger ein gesonderter Trägerarm (12) ist, **dadurch gekennzeichnet, dass** die feststehende Vorderkante keine drehbare Scheibe trägt.

2. Mischvorrichtung nach Anspruch 1, wobei die drehbare Scheibe und die feststehende Vorderkante (8) des Mischflügels (7) an diametral entgegengesetzten Positionen an der Säule angebracht sind.

3. Mischvorrichtung nach Anspruch 1 oder 2, wobei die Scheibe waagerecht ist.

4. Mischvorrichtung nach Anspruch 1 oder 2, wobei die Scheibe relativ zur Drehrichtung der Mischschnecke (5, 20) nach vorn geneigt ist.

5. Mischvorrichtung nach einem der vorstehenden Ansprüche, wobei die Scheibe (13) durch eine Deckplatte (21) mindestens teilweise abgedeckt ist.

6. Mischvorrichtung nach Anspruch 5, wobei das Scheibenteilstück, das durch die Deckplatte (21) abgedeckt ist, zwischen der Drehachse der drehbaren Scheibe und der Säule der Mischschnecke (20) positioniert ist.

7. Mischvorrichtung nach Anspruch 5 oder 6, wobei das Scheibenteilstück, das durch die Deckplatte (21) abgedeckt ist, zwischen der Drehachse der drehbaren Scheibe und der Umfangskante der Mischschnecke (5) positioniert ist.

8. Mischvorrichtung nach Anspruch 5, 6 oder 7, wobei der Abstand zwischen der Scheibe und der Deckplatte nahe der Vorderkante (8) des Mischflügels (7) kleiner als nahe der entgegengesetzten Seite der Deckplatte ist.

9. Mischvorrichtung nach einem der vorstehenden Ansprüche, wobei eine waagerechte Kante (42) mindestens vom Vorder- und/oder Seitenteil des Umfangs der Scheibe (41) vorsteht.

10. Mischvorrichtung nach einem der vorstehenden Ansprüche, wobei die Scheibe (51) mit einer unebenen Oberseite (52) versehen ist.

11. Mischvorrichtung nach Anspruch 10, wobei die Oberseite (52) mit Rippen und/oder geneigten Oberflächen versehen ist.

12. Mischvorrichtung nach Anspruch 1, wobei die drehbare Scheibe mit einem mechanischen Antrieb (62) gekoppelt ist.

13. Mischvorrichtung nach einem der vorstehenden Ansprüche, wobei die Scheibe eine Trommel (71) auf ihrer Oberseite zum weiteren Verdrängen des zu mischenden Produkts aufweist.

14. Mischvorrichtung nach Anspruch 13, wobei die Scheibe an der Trommel (71) drehbar gelagert ist, die durch die Flanschverbindung mit einem Träger verbunden ist, der an der Mischschnecke (70) angebracht ist.

15. Mischvorrichtung nach einem der vorstehenden Ansprüche, wobei eine flache Platte an der Vorderkante des Mischflügels (7) angebracht ist, wobei sich die Platte relativ zum Boden nach oben neigt und wobei die Platte mit einer abgeschrägten Kante versehen ist, die die Vorderkante mit Blick in Drehrichtung der Mischschnecke (5) bildet.

## Revendications

1. Dispositif de mélange comprenant un récipient avec un fond et une paroi verticale, dans lequel au moins une vis sans fin de mélange rotative (5, 20, 40) est placée dans le récipient comprenant une colonne et au moins une lame de mélange hélicoïdale (7) rattachée à la colonne, la lame de mélange comprenant un bord avant (8) qui peut circuler sur le fond, dans lequel la vis sans fin de mélange est munie d'un support supportant un disque rotatif (13, 31, 41, 51, 71), dans lequel le bord avant de la lame de mélange est fixe par rapport à la colonne, et dans lequel au moins un côté du disque rotatif est à la même hauteur que le bord avant de la lame de mélange et dans lequel la distance angulaire entre de bord avant de la lame de mélange et le disque rotatif est supérieure à 0 radians, et dans lequel le support est un bras support (12) séparé, **caractérisé en ce que** ledit bord avant fixe ne supporte pas de disque rotatif.

2. Dispositif de mélange selon la revendication 1, dans lequel le disque rotatif et le bord avant fixe (8) de la lame de mélange (7) sont rattachés à la colonne dans des positions diamétralement opposées.

3. Dispositif de mélange selon la revendication 1 ou 2 dans lequel le disque est horizontal.

4. Dispositif de mélange selon la revendication 1 ou 2 dans lequel le disque est incliné vers l'avant par rapport au sens de rotation de la vis sans fin de mélange (5, 20).

5. Dispositif de mélange selon l'une quelconque des revendications précédentes dans lequel le disque (13) est au moins partiellement recouvert par une plaque de recouvrement (21).

6. Dispositif de mélange selon la revendication 5 dans lequel la section de disque qui est recouverte par la plaque de recouvrement (21) est placée entre l'axe de rotation du disque rotatif et la colonne de la vis sans fin de mélange (20).

7. Dispositif de mélange selon la revendication 5 ou 6 dans lequel la section de disque qui est recouverte par la plaque de recouvrement (21) est placée entre l'axe de rotation du disque rotatif et le bord circonférentiel de la vis sans fin de mélange (5).

8. Dispositif de mélange selon la revendication 5, 6 ou 7 dans lequel la distance entre le disque et la plaque de recouvrement est plus petite à proximité du bord avant (8) de la lame de mélange (7) qu'à proximité du côté opposé de la plaque de recouvrement.

9. Dispositif de mélange selon l'une quelconque des revendications précédentes dans lequel un bord horizontal (42) fait saillie au moins depuis la partie avant et/ou latérale de la circonférence du disque (41).

10. Dispositif de mélange selon l'une quelconque des revendications précédentes dans lequel le disque (51) est muni d'une surface supérieure inégale (52).

11. Dispositif de mélange selon la revendication 10 dans lequel la surface supérieure (52) est munie de nervures et/ou de surfaces inclinées.

12. Dispositif de mélange selon la revendication le disque rotatif est couplé à un entraînement mécanique (62).

13. Dispositif de mélange selon l'une quelconque des revendications précédentes dans lequel le disque comprend un tambour (71) à sa surface supérieure pour davantage de déplacement du produit à mélanger.

14. Dispositif de mélange selon la revendication 13 dans lequel le disque est tourillonné au tambour (71), qui est raccordé par une bride de raccordement à un support rattaché à la vis sans fin de mélange (70)

15. Dispositif de mélange selon l'une quelconque des revendications précédentes dans lequel une plaque plate est rattachée au bord avant de la lame de mélange (7), ladite plaque étant inclinée vers le haut par rapport au fond et ladite plaque étant munie d'un bord biseauté formant le bord avant vu dans le sens de rotation de la vis sans fin de mélange (5).
